# EUROPEAN PATENT SPECIFICATION

(11) **EP 4 384 748 B1**
(45) Date of publication and mention of the grant of the patent: **07.05.2025**
(21) Application number: 23768672.0
(22) Date of filing: 02.08.2023
(51) Int. Cl.: F17C 13/00

(54) **TANK FOR CONTAINING GASES AND FLUIDS IN GENERAL**
BEHÄLTER ZUR AUFNAHME VON GASEN UND FLÜSSIGKEITEN IM ALLGEMEINEN
RÉSERVOIR POUR CONTENIR DES GAZ ET DES FLUIDES EN GÉNÉRAL

(30) Priority: 28.09.2022 IT 202200019980
(43) Date of publication of application: 19.06.2024
(73) Proprietor: Walter Tosto S.p.A., 66100 Chieti Scalo (CH) (IT)
(72) Inventor: TOSTO, Luca, 66100 Chieti Scalo (CH) (IT); POPA, Dorin, Bucarest (RO)
(74) Representative: Tiburzi, Andrea
(86) International application number: PCT/IT2023/050190
(87) International publication number: WO 2024/069659

(56) References cited:
- DE-A1- 102016 220 995
- US-A- 3 896 961

## Description

The present invention relates to a tank for containing gases and fluids in general.

### Field of invention

More specifically, the invention relates to a tank of the above type (see for example US 3 896 961 A), designed and manufactured in particular to allow the containment of light gases at high pressure, such as hydrogen or helium, but which can be used for any application in which it is necessary to obtain a very high held with equally high safety.

In the following, the description will be directed to tanks or containers for high-pressure hydrogen, but it is clear that the description should not be considered limited to this specific use.

### Prior art

One of the major critical issues in the storage of hydrogen gas is the potential embrittlement effect it can cause due to diffusion into the metallic material. This phenomenon can also be related to the pressure level considered for storage.

In particular, carbon and low-alloy steels are currently common structural materials for high-pressure hydrogen storage tanks. The equipment made with these materials, subjected to multiple pressure cycles, is subject to failures due to the mechanism of the so-called hydrogen embrittlement even at room operating temperature.

This phenomenon occurs above all in high-strength steels and less so in low-alloy steels, under hydrogen pressure, and it is amplified if the equipment is subjected to several cycles.

One solution would be to provide a protection inside the tank, to be applied to the metal part to prevent this potential phenomenon, i.e., the application on the internal surface of a suitable polymer, which, at the same time, has the property of significantly reducing the permeation of the hydrogen in the metal support, thus substantially reducing the phenomenon of hydrogen embrittlement, low aging tendency, good cohesion with the metal support and substantial influence of hydrogen on chemical and physical characteristics.

Currently, there are containers or tanks for hydrogen made of aluminum alloys, which are able to contain hydrogen at a pressure of 700 bar.

However, these containers do not have sufficient sealing performance for the storage of large volumes of hydrogen, and for long times, with large dimensions, so as to ensure full and continuous availability.

In addition to the above, the tanks according to the prior art do not allow the location of a possible leak, such that, once it has been detected that the tank has leak problems, lengthy and costly checks must be carried out to determine the location of the leak. For this purpose, very expensive devices present on the market are also used. Also, in the event of a leak, the tank often has to be disassembled from where it is. These operations are time-consuming as well as expensive.

It is evident how the industry feels the possibility of having containers capable of containing light gases such as hydrogen or helium, at high pressure.

### Scope of the invention

In light of the above, it is, therefore, an object of the present invention to propose a tank for light gases, as well as for other fluids, in which a high seal is required, which has containment performances superior to those of common tanks according to the prior art.

It is also an object of the present invention to propose a tank that can be safe, allowing rapid detection of any gas leaks or losses in general also considering a possible accumulation system.

### Object of the invention

It is, therefore, specific object of the present invention a tank for containing fluids and gases, such as hydrogen and the like, comprising a wall, having an external face, facing the outside of the tank, and an internal face, facing the inside of the tank, wherein said wall is arranged on said frame, a first internal lining layer, made of aluminum or other corrosion-resistant material, a support frame, placed between said wall and said first internal lining layer, wherein said wall is arranged on said support frame, and one or more dispersion nets, arranged integrated in said support frame, wherein said one or more dispersion networks disperse the gas contained in the tank in case of leaks between said wall and said first internal lining layer.

Always according to the invention, said support frame may comprise a plurality of strips arranged to form a framework, which identifies a plurality of spacings, and said each dispersion net may be arranged in a respective spacing.

Still according to the invention, said wall may comprise a plurality of housings, and said support frame may comprise a plurality of strips, arranged in said housings.

Advantageously according to the invention, said wall may have one or more through holes or channels, for the gas to escape in case of a leak from the tank.

Further according to the invention, said through holes may have a thread in correspondence with said external face, to which it is possible to connect and fix devices, sensors, control systems, and the like.

Preferably according to the invention, said tank may comprise a second internal lining layer made of polymeric material, such as polyethylene, coupled to said internal face.

Always according to the invention, said dispersion net may be of the "waved mesh" type, and are made of steel, aluminum, or aluminum alloy.

Still according to the invention, said lining material may be a polymer, such as polyethylene, one of the polymers used as a protective lining to prevent or limit the penetration of hydrogen.

It is further object of the present invention a leak detection system, comprising a tank as defined above, a pressure sensor, and a plurality of connecting pipes, wherein each connecting pipe connects said pressure sensor to a through channel, wherein in case of a gas leak occurs near one of said through channels, said gas would be preliminarily diffused through said dispersion net, before reaching said pressure sensor by means of the closest connection pipe, and wherein, based on the connection pipe of which said pressure sensor detects a pressure increase, the area of said tank in which there is a leak can be determined.

It is also object of the present invention a method of lining a tank for a gas, such as hydrogen, urea, and the like, as defined above, comprising the following steps: A. making said housings said through holes or channels on a flat sheet, for making said wall, wherein said sheet is made of aluminum or aluminum alloy; B. performing a calendering and/or forming operation on said sheet, to obtain the shape of the tank; C. applying said frame on said wall, arranging said strips in respective housings; D. applying said dispersion nets on said frame; applying said first internal lining; E. applying said second internal lining made of polymeric material.

Always according to the invention, said step F of applying said second internal lining comprises the following steps: introducing a lining material powder into a tank; applying the lining material on said first internal lining layer; and fixing the lining material to the first internal lining layer of said tank.

Still according to the invention, said step of applying the lining material may comprise the sub-steps of: heating the tank and the lining material contained until it becomes liquid at a first temperature and for a first time interval; moving said tank, so that the lining material adheres to the first internal lining of said tank; cooling said tank, bringing said tank to a second temperature, for a second time interval; and moving said tank.

Advantageously according to the invention, said heating step may take place at a temperature of about 220 °C for a time interval, preferably of about 30 minutes.

Further according to the invention, said cooling step may take place at a temperature of about 20 °C for a time interval preferably of about 30 minutes.

Preferably according to the invention, said fixing step may comprise the sub-steps of: introducing a gas, such as air and the like, at a first fixing pressure, and at a first fixing temperature; and inserting a gas, such as air and the like, at a second fixing pressure, and at a second fixing temperature lower than said first fixing temperature.

Always according to the invention, said first fixing pressure may be about 2.5 bars and said first fixing temperature is about 80°C, and said second fixing pressure may be about 3 bars and said second fixing temperature is about 20°C.

### Brief description of the figures

The present invention will be now described, for illustrative but not limitative purposes, according to its preferred embodiments, with particular reference to the figures of the enclosed drawings, wherein:
figure 1 shows a section through a high sealing tank for light gases, according to the present invention;
figure 2 shows a further section of the high-sealing tank according to figure 1;
figure 3 shows a section of the high-pressure tank, in which the arrangement of the frame of the tank is visible;
figure 4 shows a cross-section of the high-pressure tank;
figure 5 shows the application of a pressure-sensing system applied to a tank;
figure 6 shows a step of the method for lining the inside of a container according to the present invention relating to the opening of the tank;
figure 7 shows a step of the method for lining the inside of a container according to the present invention relating to loading the polymer powder into the tank;
figure 8 shows a step of the method for lining the inside of a tank according to the present invention relating to closing the tank;
figure 9 shows a step of the method for lining the inside of a tank according to the present invention relating to heating and moving the tank;
figure 10 shows a step of the method for the internal lining of a tank according to the present invention relating to the cooling and handling of the tank;
figure 11 shows a step of the method for the internal lining of a tank according to the present invention relating to the installation of an internal pressure control system;
figure 12 shows a step of the method for lining the inside of a tank according to the present invention relating to the introduction of hot air at high pressure; and
figure 13 shows a step of the method for the internal lining of a tank according to the present invention relating to the introduction of high pressure air at room temperature.

### Detailed description

In the various figures, similar parts will be indicated with the same reference numbers.

In order to eliminate the threat of hydrogen embrittlement, high-pressure hydrogen contained in a tank can be prevented from contacting the steel pressure tank by installing an aluminum alloy liner that has good permeation resistance of the hydrogen and creates an escape path avoiding the build-up of pressure between the lining and the wall of the tank subjected to high pressure.

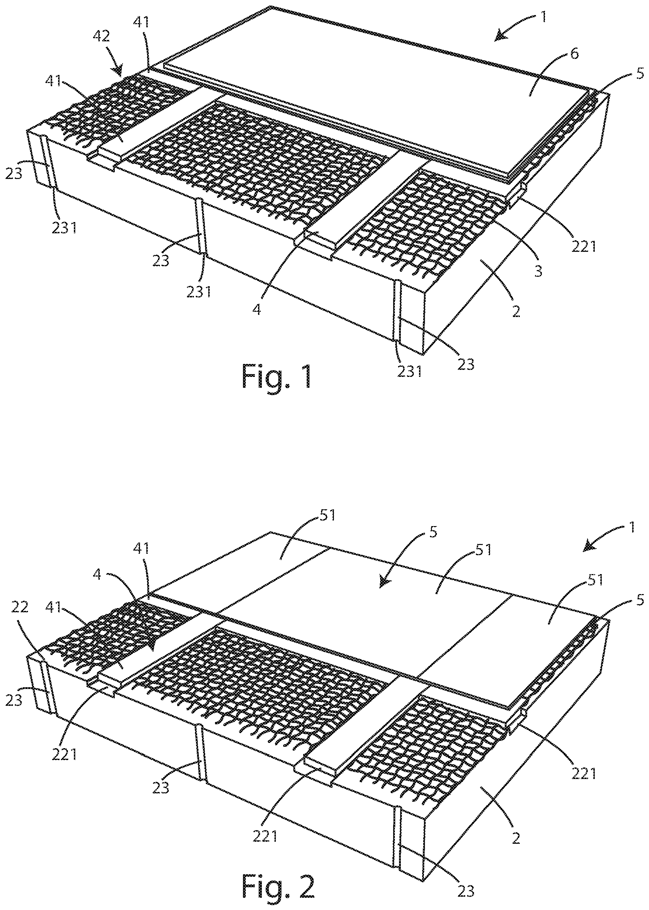

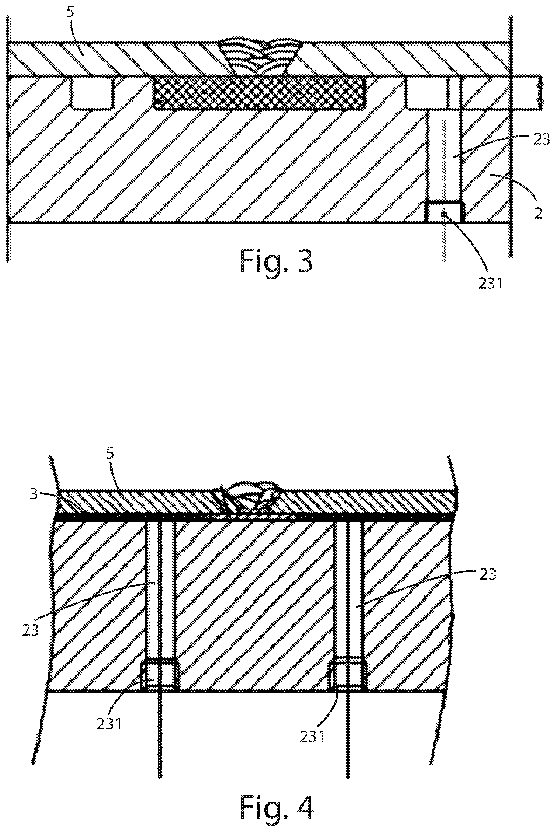

With reference to figures 1, 2, 3, and 4, a section of a tank 1 for containing hydrogen can be observed, which has various layers. In particular, the layered structure of the same tank 1 can be observed, in which the wall 2 of the tank 1 is provided, a plurality of dispersion nets 3, a support frame 4, a first internal lining layer 5, and a second internal lining layer 6.

The wall 2 of the tank 1 has an external face 21, which determines the external surface of the tank 1, and an internal face 22, which has housings 221, the function of which will be better described below.

Said housings 221 are made as grooves on the inner surface of the wall 2. In some embodiments, these grooves are made by grinding, by means of suitable tools. However, the housings 221 can also be made with different methods.

The wall 2 of the tank 1 is preferably made of carbon steel or a low-alloy material with high resistance, so as to make the tank 1 lighter and in any case provided with a high seal.

Through holes or channels 23 are provided on the wall 2, arranged spaced preferably but not necessarily evenly over the entire surface of the tank 1. Furthermore, in correspondence with the external face 21, said through holes 23 have a thread 231, at which it is possible to connect and secure devices, sensors, or control systems in general. The function of these through channels 23 will be discussed below.

The dispersion net 3 is interposed between the wall 2 and the first internal lining layer 5. Furthermore, each dispersion net 3 is delimited by the support frame 4 and is integrated therein.

In the embodiment under examination, the dispersion nets 3 are of the "waved mesh" type, and are preferably made of steel, or, in further other embodiments, of aluminum. The dispersion nets 3 also have the function of avoiding deformation of the first internal lining layer 5 made of aluminum or other corrosion-resistant material.

The dispersion net 3 allows for facilitating a superficial diffusion of gas leaks, such as hydrogen and the like, in case of leaks.

The support frame 4 is made up of a framework of strips 41, which are arranged in said housings 221. The strips identify spacings 42 between them.

Said support frame 4 is preferably made of aluminum or aluminum alloy. The support frame 4 allows the correct coupling between the wall 2 of the tank 1 and the first internal lining layer 5 made of aluminum or other corrosion-resistant material.

The first internal lining layer 5 of the tank 1 is made of aluminum or aluminum alloy, and consists of a plurality of panels 51, arranged side by side so as to cover the entire internal surface of the tank 1.

The first internal lining layer 5 allows a high seal, to allow the use of the tank 1 not only for the containment of hydrogen but also for the containment of different types of gas, the mixtures/compounds of the production of urea. In this case, the selected material of the first internal lining layer 5 and of the support frame 4 would be resistant to the above compounds.

The second lining 6 is made of hydrogen-resistant polymeric material such as polyethylene (PE), but other polymeric materials may also be used in other embodiments.

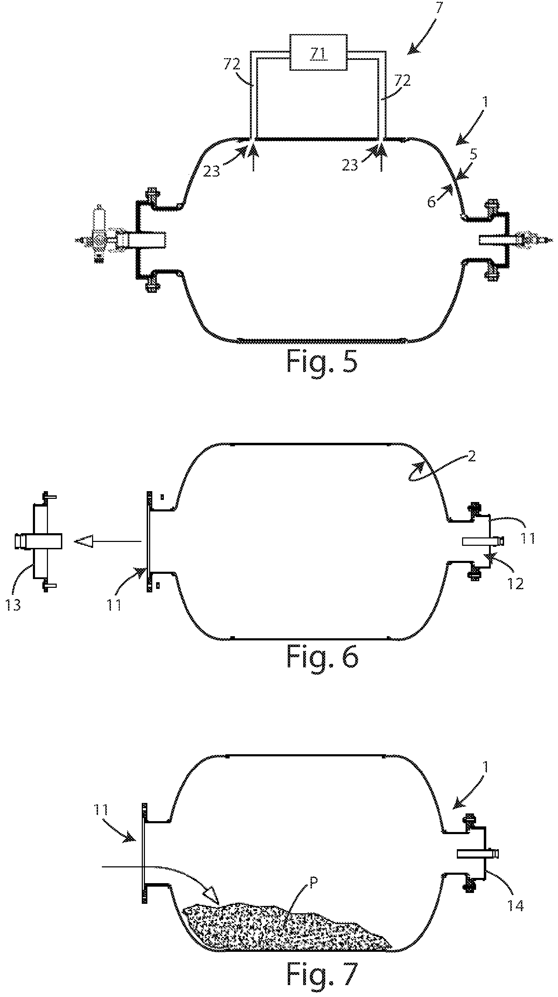

Thanks to the through channels 23, the tank 1 can be equipped with suitable control systems. In particular, with reference to figure 5, it can be observed, schematically, the connection of a leak detection system 7, comprising several sensors 71 according to the application and two connection pipes 72. Each of the two connection pipes 72 connects the pressure sensor 71 to a through channel 23. In the case under examination, only two connection pipes 72 are shown and therefore only two through channels 23, but it must be considered that more than two or a multiplicity of connection pipes 72 can also be provided, with the respective through channels 23.

In the event that a gas leak occurs, for example, hydrogen, in the vicinity of one of the through channels 23, it would first be diffused through the dispersion net 3, to then reach the pressure sensor through the closest connection pipes 72, closest to the pressure sensor 71. The gas diffusion function of the dispersion net 3 makes it possible to avoid excessive gas concentrations for safety reasons.

Based on which connecting pipe the pressure sensor 71 detects an increase in pressure on the respective pipe 72, it is possible to determine more precisely the area in which there is a leak. In this way, it is possible to repair the tank 1 and in particular the linings, with greater rapidity and precision.

Internally, as mentioned, a second internal lining layer 6 is provided, coupled to the first internal lining layer 5 made of aluminum or other corrosion-resistant material.

In the embodiment described, the second internal lining layer 6 is a hydrogen-resistant polymer, such as polyethylene (PE).

For the realization of the tank 1, the following steps are carried out:
- a flat sheet is acquired, for the realization of said wall 2, of carbon steel or a low alloy material with high resistance and the housings 221 are made as grooves and the through holes or channels 23;
- a calendering and/or forming operation is carried out on said metal sheet to obtain the shape of the tank 1;
- applying said support frame 4 to said wall 2, arranging said strips 41 in respective housings 221;
- dispersion nets 3 are applied;
- the first internal lining layer 5 is applied;
- the second internal lining layer 6 in hydrogen-resistant polymeric material is applied.

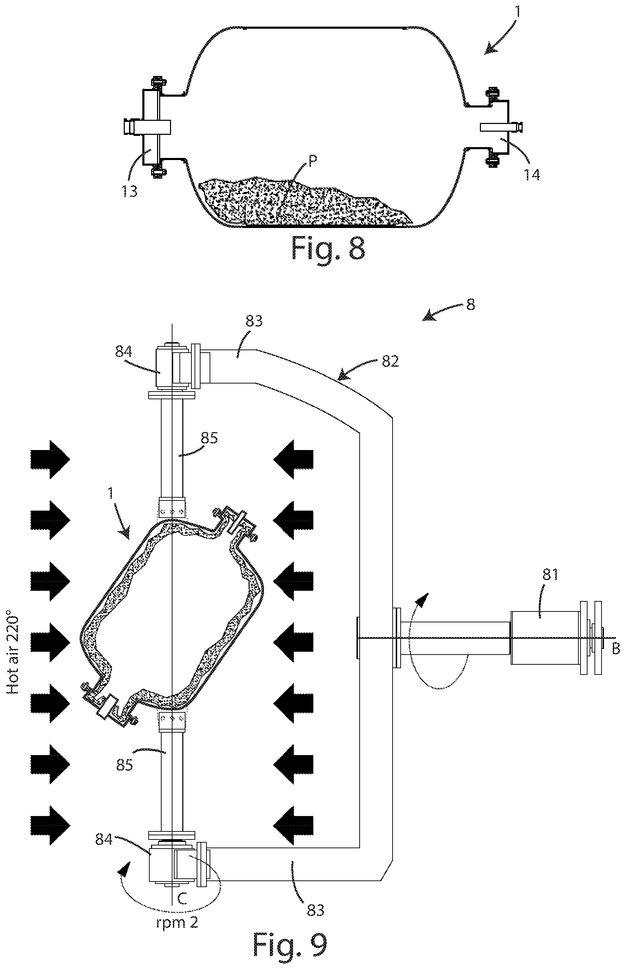

In relation to the last application step of the second internal lining layer 6 in hydrogen-resistant polymeric material, reference is made to figures 6, 7, 8, 9, 10, 11, 12, and 13, which show the tank 1 to be internally lined.

The wall 2 of the tank 1 comprises a delimiting volume V by means of said internal face 22. The tank 1 also comprises a first opening 11 and a second opening 12, opposite to said first opening 11, closed with a respective closing nozzle 13 and 14.

Each closing nozzle 13 and 14 has an internal surface, respectively indicated with the reference numerals 131 and 141, and comprises a fixing flange 132 and 142, respectively, for fixing, with suitable screws, to a respective lip of the tank 1.

To arrange the second lining 6 inside the tank 1, the latter is opened by removing the first closure nozzle 13, so that it can be inserted into the internal volume V of the lining material powder, which, as mentioned, in general it is a polymer, through the first opening 11. In the present embodiment, the lining material used is a polymer P, such as polyethylene (PE), as the lining material.

Subsequently, the tank 1 is closed and sealed again by means of the same closing nozzle 13, by screwing the tightening screws again to the lip of the tank 1.

In a subsequent step, the tank 1 is subjected to heating and it is subjected to hot air at a temperature of 220 °C.

At the same time, the tank 2 is rotated on itself. This rotation can be achieved by means of a support unit 8, shown in the figure by way of example. Said support unit 8 comprises a support unit 81 rotatable around a first rotation axis B, and a gripping structure 82, having two arms 83, at the ends of which a respective joint 84 is provided. Said support unit 8 comprises also two anchoring members 85, each having a first end rotatably coupled to a respective joint 84 of the arm 83, and a second end, fixed to said tank 1. The anchoring members 85 are configured, in use, to rotate the tank 1 around a second rotation axis C, not parallel to the rotation axis B.

In the cooking step, the polymer melts, reaching the liquid state. Furthermore, the liquid polymer P adheres to the first internal lining layer 5 of the tank 1, thanks to a rotary movement along two degrees of freedom. This allows an optimal adhesion of the polymer P to the walls of the tank 1.

The cooking or heating time can be around 30 minutes.

The hot air to heat tank 1 is generated by hot air emitters and has a temperature of about 220°C (not shown in the figure).

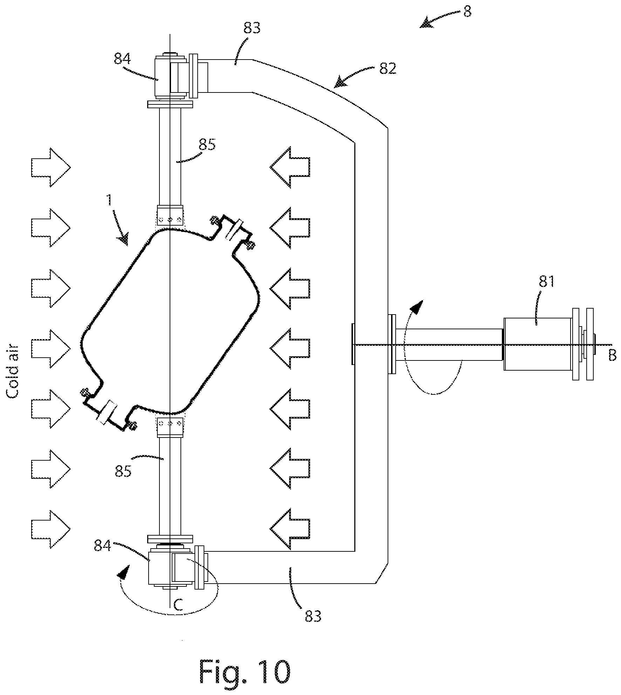

Subsequently, the tank 2 is cooled (see figure 10) and is kept in rotation, while cold air is blown on it. In this way, the solidification of the polymer P and an optimal adhesion of the same to the first internal lining layer 5 of the wall 2 and to the internal surfaces of the closure nozzles 13 and 14 are obtained.

In a cooling time of approximately 30 minutes, the coating with the polymer P of the first internal lining layer 5 of the tank 1 is completed.

Subsequently, in order to allow optimal adhesion of the lining polymer P, as mentioned in the first internal lining layer 5 of the tank 1, air is introduced at a controlled pressure (i.e., greater than atmospheric pressure).

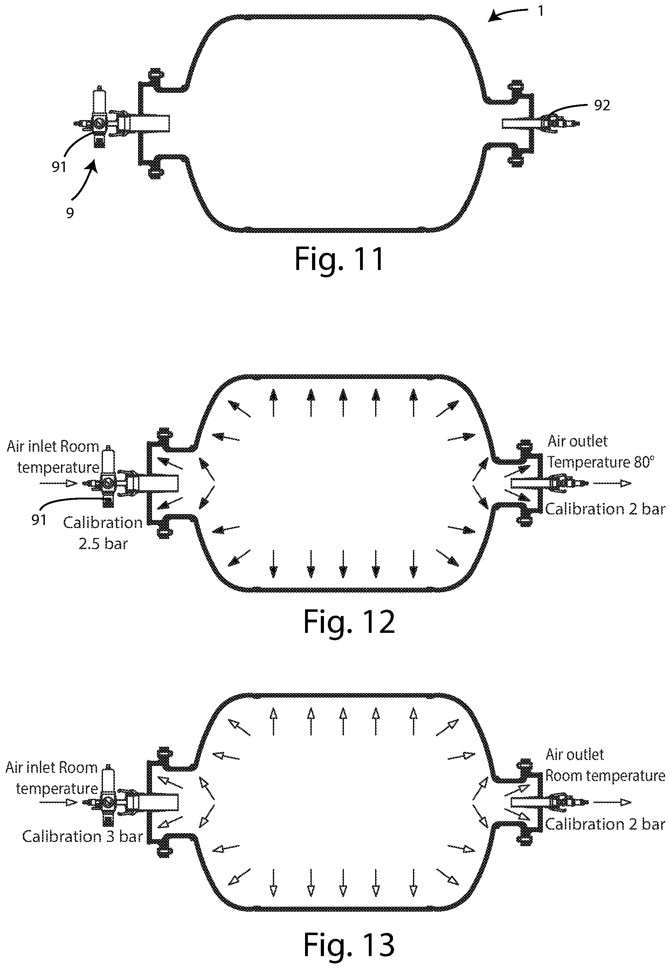

For this purpose, with reference to figure 11, a pressure control system 9 inside tank 1 is installed on the tank 2.

In particular, the pressure control system 9 comprises a pressure regulator 91, which is arranged on an access channel of the first closing nozzle 13, and a safety valve 92, which is arranged on the access channel of the second closing nozzle 14.

In other embodiments, said pressure regulator 91 and said safety valve 92 can also be arranged in different positions.

As can be seen in figure 12, through the pressure regulator 3, hot compressed air is introduced into the volume V, at a temperature of about 80° and a pressure of 2.5 bar. The high-pressure hot air has the effect of "softening" the lining on the first inner lining layer 5 of the tank 1, as well as on the inner surfaces of the first 13 and the second 14 closing nozzle.

In this way, there is the effect of making the lining polymer P adhere in a uniform manner, even in concave, convex, or interstitial parts of the aforementioned surfaces, in an optimal way, eliminating or limiting the formation of bubbles or uncoated areas, making the second internal lining 6 uniform.

The safety valve 92 allows any excess air to be vented to maintain the pressure at a specified threshold, which is lower than the pressure value with which the air is introduced through said pressure regulator 91.

In particular, in a preferred embodiment, the pressure regulator 91 allows the entry of hot air at a pressure of 2.5 bar, while the safety valve 92 is calibrated by a maximum threshold of 2 bar for safety.

Subsequently, referring to figure 13, air enters through the pressure regulator 91 at room temperature, therefore typically between 15°C and 25°C, at a pressure of 3 bar, always calibrating the safety valve at 2 bar.

This step of introduction of air at room temperature, therefore colder than the previous step, and at a pressure greater than atmospheric pressure, allows the second internal lining 6 to cool down in polymer P, allowing for optimal adhesion. In other words, the second internal lining 6 is "kept in adherence" on the first internal lining layer 5 of the tank 1 and on the internal surface of the closing nozzles 13 and 14, to avoid any new formation of bubbles or imperfections in the internal second lining layer 6.

Subsequently, the closing nozzles 13 and 14 are removed by unscrewing the screws of the flanges.

The proposed lining system has several advantages. Indeed, hydrogen, while being an extremely efficient and environmentally friendly energy resource, presents some significant challenges when it comes to its transportation. The solution according to the invention, thanks to the structure considered and the materials used, can be applied to both gas pipelines and pipes, making the transport of hydrogen safer and more efficient.

Pipeline steels play a significant role in the transport of hydrogen. These materials, while extremely strong and durable, can be vulnerable to corrosion and wear, especially when used to transport gases such as hydrogen and/or mixtures of hydrogen and methane. The lining system according to the invention can be applied directly to the steel pipes, providing an additional protective barrier that can considerably extend their life span and keep their performance intact.

Another aspect to consider concerns the safety of pipeline operations. The handling and transport of hydrogen can involve significant risks, due both to the nature of the gas itself and to the complex operating conditions. The lining solution according to the invention, through its sophisticated design and material selection, can help improve the safety of pipeline operations, reducing the risk of leaks and failures while ensuring a constant and uninterrupted hydrogen flow.

Furthermore, the lining solution according to the invention can be used to eliminate or delay the effects of hydrogen on pipelines. Hydrogen, in fact, can cause the embrittlement of the steel and the growth of cracks, phenomena that can compromise the structure of the pipes or tanks, and lead to malfunctions or breakdowns. The proposed lining can act as a protective barrier, preventing pressurized hydrogen from coming into direct contact with the steel and thereby causing structural damage. In this way, the solution according to the invention can not only extend the life of the pipes, but can also contribute to maintaining the efficiency and reliability of the hydrogen transport system.

### Advantages

An advantage of the present invention is that of proposing a tank internally lined in aluminum and polymer, for maximum protection, which allows to withstand a high pressure, even for very light gases such as hydrogen or helium, and allow the detection of any gas leaks.

A further advantage of the present invention is that of limiting possible concentrations of gas in the event of leaks.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Tank (1) for containing fluids and gases, such as hydrogen and the like, comprising
a wall (2), having an external face (21), facing the outside of the tank (1), and an internal face (22), facing the inside of the tank (1),
a first internal lining layer (5), made of aluminum or other corrosion-resistant material,
a support frame (4), placed between said wall (2) and said first internal lining layer (5), wherein said wall (2) is arranged on said support frame (4), **characterized by**
one or more dispersion nets (3), arranged integrated in said support frame (4), wherein said one or more dispersion networks (3) disperse the gas contained in the tank (1) in case of leaks between said wall (2) and said first internal lining layer (5).

2. Tank (1) according to the preceding claim, **characterized**
**in that** said support frame (4) comprises a plurality of strips (41) arranged to form a framework, which identifies a plurality of spacings (42), and
**in that** said each dispersion net (3) is arranged in a respective spacing.

3. Tank (1) according to the preceding claim, **characterized**
**in that** said wall (2) comprises a plurality of housings (221), and
**in that** said support frame (4) comprises a plurality of strips (41), arranged in said housings.

4. Tank (1) according to any one of the preceding claims, **characterized in that** said wall (2) has one or more through holes or channels (23), for the gas to escape in case of a leak from the tank (1).

5. Tank (1) according to the preceding claim, **characterized in that** said through holes (23) have a thread (231) in correspondence with said external face (21), to which it is possible to connect and fix devices, sensors, control systems, and the like.

6. Tank (1) according to any one of the preceding claims, **characterized in that** it comprises a second internal lining layer (6) made of polymeric material, such as polyethylene (PE), coupled to said internal face (22).

7. Tank (1) according to any one of the preceding claims, **characterized in that** said dispersion net (3) are of the "waved mesh" type, and are made of steel, aluminum, or aluminum alloy.

8. Tank (1) according to claim 6, **characterized in that** one of the polymers of said second internal lining layer (6) is used as a protective lining to prevent or limit the penetration of hydrogen.

9. Leak detection system, comprising
a tank (1) according to any one of claims 4 or 5,
a pressure sensor (71), and
a plurality of connecting pipes (72), wherein each connecting pipe (72) connects said pressure sensor (71) to a through channel (23),
wherein in case of a gas leak occurs near one of said through channels (23), said gas would be preliminarily diffused through said dispersion net (3), before reaching said pressure sensor (71) by means of the closest connection pipe (72), and
wherein, based on the connection pipe (72) of which said pressure sensor (71) detects a pressure increase, the area of said tank (2) in which there is a leak can be determined.

10. Method of lining a tank (1) for a gas, such as hydrogen, urea, and the like, according to any one of claims 1-8, comprising the following steps:
A. making said housings (221) said through holes or channels (23) on a flat sheet, for making said wall (2), wherein said sheet is made of aluminum or aluminum alloy;
B. performing a calendering and/or forming operation on said sheet, to obtain the shape of the tank (1);
C. applying said support frame (4) on said wall (2), arranging said strips (41) in respective housings (221);
D. applying said dispersion nets (3) on said support frame (4);
E. applying said first internal lining layer (5);
F. applying said second internal lining (6) made of polymeric material.

11. Method according to the preceding claim, **characterized in that** said step F of applying said second internal lining (6) comprises the following steps:
- introducing a lining material powder into a tank (1);
- applying the lining material (P) on said first internal lining layer (5); and
- fixing the lining material (P) to the first internal lining layer (5) of said tank (1).

12. Method according to the preceding claim, **characterized in that** said step of applying the lining material (P) comprises the sub-steps of:
- heating the tank (1) and the lining material (P) contained until it becomes liquid at a first temperature and for a first time interval;
- moving said tank (1), so that the lining material adheres to the first internal lining (5) of said tank (1);
- cooling said tank (1), bringing said tank (1) to a second temperature, for a second time interval; and
- moving said tank (1).

13. Method according to the preceding claim, **characterized in that** said heating step takes place at a temperature of about 220°C for a time interval, preferably of about 30 minutes.

14. Method according to any one of claims 12 or 13, **characterized in that** said cooling step takes place at a temperature of about 20°C for a time interval preferably of about 30 minutes.

15. Method according to any one of claims 11-14, **characterized in that** said fixing step comprises the sub-steps of:
introducing a gas, such as air and the like, at a first fixing pressure, and at a first fixing temperature; and
inserting a gas, such as air and the like, at a second fixing pressure, and at a second fixing temperature lower than said first fixing temperature.

16. Method according to the preceding claim, **characterized**
**in that** said first fixing pressure is about 2.5 bars and said first fixing temperature is about 80°C, and
**in that** said second fixing pressure is about 3 bars and said second fixing temperature is about 20°C.

## Patentansprüche

1. Behälter (1) zur Aufnahme von Fluiden und Gasen, wie Wasserstoff und dergleichen, mit eine Wand (2) mit einer Außenfläche (21), die der Außenseite des Behälters (1) zugewandt ist, und einer Innenfläche (22), die der Innenseite des Behälters (1) zugewandt ist, eine erste innere Auskleidungsschicht (5) aus Aluminium oder einem anderen korrosionsbeständigen Material, einen Stützrahmen (4), der zwischen der Wand (2) und der ersten Innenauskleidungsschicht (5) angeordnet ist, wobei die Wand (2) auf dem Stützrahmen (4) angeordnet ist, **gekennzeichnet durch** ein oder mehrere Dispersionsnetze (3), die in dem Tragrahmen (4) integriert angeordnet sind, wobei das eine oder die mehreren Dispersionsnetze (3) das in dem Behälter (1) enthaltene Gas im Falle von Lecks zwischen der Wand (2) und der ersten Innenauskleidungsschicht (5) dispergieren.

2. Behälter (1) nach dem vorhergehenden Anspruch, **dadurch gekennzeichnet dass** der Stützrahmen (4) eine Vielzahl von Leisten (41) umfasst, die so angeordnet sind, dass sie einen Rahmen bilden, der eine Vielzahl von Abständen (42) kennzeichnet, und dass jedes Dispersionsnetz (3) in einem entsprechenden Abstand angeordnet ist.

3. Behälter (1) nach dem vorhergehenden Anspruch, **dadurch gekennzeichnet dass** die Wand (2) eine Vielzahl von Gehäusen (221) aufweist, und dass der Stützrahmen (4) eine Vielzahl von Leisten (41) umfasst, die in den Gehäusen angeordnet sind.

4. Behälter (1) nach einem der vorhergehenden Ansprüche, **dadurch gekennzeichnet, dass** die Wand (2) ein oder mehrere Durchgangslöcher oder Kanäle (23) aufweist, damit das Gas im Falle eines Lecks aus dem Behälter (1) entweichen kann.

5. Behälter (1) nach dem vorhergehenden Anspruch, **dadurch gekennzeichnet, dass** die Durchgangslöcher (23) in Übereinstimmung mit der Außenfläche (21) ein Gewinde (231) aufweisen, an dem es möglich ist, Geräte, Sensoren, Steuersysteme und dergleichen anzuschließen und zu befestigen.

6. Behälter (1) nach einem der vorhergehenden Ansprüche, **dadurch gekennzeichnet, dass** er eine zweite Innenauskleidungsschicht (6) aus polymerem Material, wie Polyethylen (PE), aufweist, die mit der Innenfläche (22) verbunden ist.

7. Behälter (1) nach einem der vorhergehenden Ansprüche, **dadurch gekennzeichnet, dass** das Dispersionsnetz (3) vom Typ "gewellte Masche" ist und aus Stahl, Aluminium oder einer Aluminiumlegierung besteht.

8. Behälter (1) nach Anspruch 6, **dadurch gekennzeichnet, dass** eines der Polymere der zweiten inneren Auskleidungsschicht (6) als Schutzauskleidung verwendet wird, um das Eindringen von Wasserstoff zu verhindern oder zu begrenzen.

9. Lecksuchsystem, bestehend aus behälter (1) nach einem der Ansprüche 4 oder 5, einen Drucksensor (71), und eine Vielzahl von Verbindungsleitungen (72), wobei jede Verbindungsleitung (72) den Drucksensor (71) mit einem Durchgangskanal (23) verbindet, wobei im Falle eines Gaslecks in der Nähe eines der Durchgangskanäle (23) das Gas vorläufig durch das Dispersionsnetz (3) diffundiert wird, bevor es den Drucksensor (71) über die nächstgelegene Verbindungsleitung (72) erreicht, und wobei, basierend auf der Verbindungsleitung (72), von denen der Drucksensor (71) einen Druckanstieg feststellt, kann der Bereich des Behälters (2) bestimmt werden, in dem sich ein Leck befindet.

10. Verfahren zum Auskleiden eines Behälters (1) für ein Gas, wie Wasserstoff, Harnstoff und dergleichen, nach einem der Ansprüche 1-8, umfassend die folgenden Schritte:
A. Herstellen der Gehäuse (221) mit den Durchgangslöchern oder Kanälen (23) auf einem flachen Blech, um die Wand (2) herzustellen, wobei das Blech aus Aluminium oder einer Aluminiumlegierung besteht;
B. Durchführen eines Kalandrier- und/oder Formgebungsvorgangs an der Platte, um die Form des Behälters (1) zu erhalten;
C. Anbringen des Stützrahmens (4) an der Wand (2), Anordnen der Streifen (41) in jeweilige Gehäuse (221);
D. Anbringen der Dispersionsnetze (3) auf dem Tragrahmen (4);
E. Anbringen der ersten Innenauskleidungsschicht (5);
F. Anbringen der zweiten Innenauskleidung (6) aus polymerem Material.

11. Verfahren nach dem vorhergehenden Anspruch, **dadurch gekennzeichnet, dass** der Schritt F des Anbringens der zweiten Innenauskleidung (6) die folgenden Schritte umfasst:
- Einbringen eines Auskleidungsmaterialpulvers in einen Behälter (1);
- Aufbringen des Auskleidungsmaterials (P) auf die erste Innenauskleidungsschicht (5); und
- Befestigung des Auskleidungsmaterials (P) an der ersten inneren Auskleidungsschicht (5) des Behälters (1).

12. Verfahren nach dem vorhergehenden Anspruch, **dadurch gekennzeichnet, dass** der Schritt des Aufbringens des Auskleidungsmaterials (P) die folgenden Unterschritte umfasst:
- Erwärmung des Behälters (1) und des darin enthaltenen Auskleidungsmaterials (P), bis es bei einer ersten Temperatur und für eine erste Zeitspanne flüssig wird;
- Bewegen des Behälters (1), so dass das Auskleidungsmaterial an der ersten Innenauskleidung (5) des Behälters (1) haftet;
- Kühlen des Behälters (1), wobei der Behälter (1) während eines zweiten Zeitintervalls auf eine zweite Temperatur gebracht wird; und
- Verschieben des Behälters (1).

13. Verfahren nach dem vorhergehenden Anspruch, **dadurch gekennzeichnet, dass** der Erhitzungsschritt bei einer Temperatur von etwa 220 °C für ein Zeitintervall von vorzugsweise etwa 30 Minuten stattfindet.

14. Verfahren nach einem der Ansprüche 12 oder 13, **dadurch gekennzeichnet, dass** der Abkühlungsschritt bei einer Temperatur von etwa 20 °C für ein Zeitintervall von vorzugsweise etwa 30 Minuten stattfindet.

15. Verfahren nach einem der Ansprüche 11-14, **dadurch gekennzeichnet, dass** der Schritt des Befestigens die Unterschritte umfasst: einleiten eines Gases, wie z. B. Luft und dergleichen, bei einem ersten Fixierdruck und einer ersten Fixiertemperatur; und einbringen eines Gases, wie Luft und dergleichen, mit einem zweiten Fixierdruck, und bei eine zweite Fixiertemperatur, die niedriger ist als die erste Fixiertemperatur.

16. Verfahren nach dem vorhergehenden Anspruch, **dadurch gekennzeichnet, dass** der erste Fixierdruck etwa 2,5 bar und die erste Fixiertemperatur etwa 80 °C beträgt, und dass der zweite Fixierdruck etwa 3 bar und die zweite Fixiertemperatur etwa 20 °C beträgt.

## Revendications

1. Réservoir (1) pour contenir des fluides et des gaz, tels que l'hydrogène et similaires, comprenant une paroi (2), ayant une face externe (21), orientée vers l'extérieur du réservoir (1), et une face interne (22), orientée vers l'intérieur du réservoir (1), une première couche de revêtement interne (5), faite d'aluminium ou d'un autre matériau résistant à la corrosion, un cadre de support (4), placé entre ladite paroi (2) et ladite première couche de revêtement interne (5), dans lequel ladite paroi (2) est disposée sur ledit cadre de support (4), **caractérisé par** un ou plusieurs filets de dispersion (3), disposés de manière intégrée dans ledit cadre de support (4), dans lequel ledit ou lesdits réseaux de dispersion (3) dispersent le gaz contenu dans le réservoir (1) en cas de fuites entre ladite paroi (2) et ladite première couche de revêtement interne (5).

2. Réservoir (1) selon la revendication précédente, **caractérisé en ce que** ledit cadre de support (4) comprend une pluralité de bandes (41) agencées pour former un cadre, qui identifie une pluralité d'espacements (42), et en ce sens que chaque filet de dispersion (3) est disposé dans un espacement respectif.

3. Réservoir (1) selon la revendication précédente, **caractérisé en ce que** ladite paroi (2) comprend une pluralité de logements (221), et **en ce que** ledit cadre de support (4) comprend une pluralité de bandes (41), disposées dans lesdits logements.

4. Réservoir (1) selon l'une quelconque des revendications précédentes, **caractérisé en ce que** ladite paroi (2) comporte un ou plusieurs trous ou canaux (23) traversants, permettant au gaz de s'échapper en cas de fuite du réservoir (1).

5. Réservoir (1) selon la revendication précédente, **caractérisé en ce que** lesdits trous traversants (23) ont un filetage (231) en correspondance avec ladite face externe (21), auquel il est possible de connecter et de fixer des dispositifs, des capteurs, des systèmes de contrôle et autres.

6. Réservoir (1) selon l'une quelconque des revendications précédentes, **caractérisé en ce qu'**il comprend une seconde couche de revêtement interne (6) en matériau polymère, tel que le polyéthylène (PE), couplée à ladite face interne (22).

7. Réservoir (1) selon l'une quelconque des revendications précédentes, **caractérisé par le fait que** les filets de dispersion (3) sont du type "à mailles ondulées" et sont en acier, en aluminium ou en alliage d'aluminium.

8. Réservoir (1) selon la revendication 6, **caractérisé par le fait que** l'un des polymères de ladite deuxième couche de revêtement interne (6) est utilisé comme revêtement protecteur pour empêcher ou limiter la pénétration de l'hydrogène.

9. Système de détection des fuites comprenant Réservoir (1) selon l'une quelconque des revendications 4 ou 5, un capteur de pression (71), et une pluralité de tuyaux de raccordement (72), dans lesquels chaque tuyau de raccordement (72) relie ledit capteur de pression (71) à un canal de passage (23), dans lequel, en cas de fuite de gaz à proximité de l'un des canaux de passage (23), le gaz est d'abord diffusé dans le filet de dispersion (3) avant d'atteindre le capteur de pression (71) au moyen du tuyau de raccordement le plus proche (72), et dans lequel, sur la base du tuyau de connexion (72) dont ledit capteur de pression (71) détecte une augmentation de la pression, il est possible de déterminer la zone du réservoir (2) dans laquelle il y a une fuite.

10. Procédé de revêtement d'un réservoir (1) pour un gaz, tel que l'hydrogène, l'urée et autres, selon l'une quelconque des revendications 1 à 8, comprenant les étapes suivantes:
A. réaliser les logements (221), des trous de passage ou des canaux (23) sur une feuille plate, pour la fabrication de la paroi (2), cette feuille étant en aluminium ou en alliage d'aluminium;
B. effectuer une opération de calandrage et/ou de formage sur ladite feuille, pour obtenir la forme du réservoir (1);
C. appliquer ledit cadre de support (4) sur ledit mur (2), en disposant lesdites bandes (41) dans les boîtiers respectifs (221);
D. appliquer lesdits filets de dispersion (3) sur ledit cadre de support (4);
E. appliquer ladite première couche de revêtement interne (5);
F. appliquer ledit second revêtement intérieur (6) en matériau polymère.

11. Procédé selon la revendication précédente, **caractérisé en ce que** ladite étape F d'application dudit second revêtement intérieur (6) comprend les étapes suivantes:
- introduction d'une poudre de matériau de revêtement dans un réservoir (1);
- appliquer le matériau de revêtement (P) sur ladite première couche de revêtement interne (5); et
- fixer le matériau de revêtement (P) à la première couche de revêtement interne (5) dudit réservoir (1).

12. Procédé selon la revendication précédente, **caractérisé en ce que** ladite étape d'application du matériau de revêtement (P) comprend les sous-étapes suivantes:
- chauffer le réservoir (1) et le matériau de revêtement (P) qu'il contient jusqu'à ce qu'il devienne liquide à une première température et pendant un premier intervalle de temps;
- déplacer ledit réservoir (1), de sorte que le matériau de revêtement adhère au premier revêtement intérieur (5) dudit réservoir (1);
- refroidir ledit réservoir (1), en amenant ledit réservoir (1) à une seconde température, pendant un second intervalle de temps; et
- déplacer ledit réservoir (1).

13. Procédé selon la revendication précédente, **caractérisé par le fait que** l'étape de chauffage a lieu à une température d'environ 220 °C pendant un intervalle de temps, de préférence d'environ 30 minutes.

14. Méthode selon l'une des revendications 12 ou 13, **caractérisée par le fait que** l'étape de refroidissement a lieu à une température d'environ 20 °C pendant un intervalle de temps d'environ 30 minutes.

15. Procédé selon l'une quelconque des revendications 11 à 14, **caractérisé en ce que** ladite étape de fixation comprend les sous-étapes de: introduire un gaz, tel que de l'air ou autre, à une première pression de fixation et à une première température de fixation; et l'insertion d'un gaz, tel que de l'air ou autre, à une seconde pression de fixation, et à une deuxième température de fixation inférieure à ladite première température de fixation.

16. Procédé selon la revendication précédente, **caractérisé par** la première pression de fixation est d'environ 2,5 bars et la première température de fixation est d'environ 80 °C, et la seconde pression de fixation est d'environ 3 bars et la seconde température de fixation est d'environ 20 °C.
